# DEMANDE DE BREVET EUROPEEN

(11) **EP 1 050 590 A1**
(43) Date de publication de la demande: **08.11.2000**
(21) Numéro de dépôt: 00401112.8
(22) Date de dépôt: 20.04.2000
(51) Int. Cl.: C21C 5/52, C21C 5/46, F27B 3/20, F27B 3/22

(54) **Four à arc électrique pour la production d'acier et procédé de mise en oeuvre de ce four**

(30) Priorité: 07.05.1999 FR 9905859
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Flichy, Sébastien, 75321 Paris Cedex 07 (FR); Laurent, Jacky, 75321 Paris Cedex 07 (FR); Viraize, Frédéric, 75321 Paris Cedex 07 (FR); Bremont, Marc, 75321 Paris Cedex 07 (FR); Vuillermoz, Jean-Claude, 75321 Paris Cedex 07 (FR)
(74) Mandataire: Vesin, Jacques

(57) **Abrégé**

Four à arc électrique pour la production d'acier, par fusion de ferrailles entre des électrodes (1), comprenant des injecteurs (6, 7) de gaz équipés d'enceintes (8) de refroidissement disposées dans une paroi (5) du four; au moins une enceinte unique (8) est associée à au moins deux injecteurs (6, 7) pour assurer leur refroidissement, et chaque injecteur (6, 7) est orienté angulairement de manière appropriée au gaz et à la fonction correspondants. Au moins l'un (6) des injecteurs est un injecteur de gaz supersonique telle qu'une lance à oxygène, et au moins un autre injecteur (7) est un brûleur pouvant utiliser un gaz oxygéné et un combustible, l'enceinte unique (8) de refroidissement présentant des orifices respectifs (9, 11) de passage pour l'injection d'oxygène et la propagation de la flamme du brûleur (7). Ces injecteurs étant orientés angulairement de manière adaptée à leurs fonctions respectives, cet agencement réduit considérablement l'encombrement des injecteurs dans la paroi du four et simplifie les alimentations en fluide autour du four.

## Description

La présente invention a pour objet un four à arc électrique pour la production d'acier, ainsi qu'un procédé pour la mise en oeuvre de ce four.

Comme on le sait, l'acier est obtenu dans ces fours par fusion de ferrailles entre des électrodes, ces fours comprenant des injecteurs de gaz équipés d'enceintes respectives de refroidissement, disposées dans une paroi du four. Ces injecteurs permettent d'injecter simultanément de l'oxygène et du gaz naturel afin d'augmenter l'apport d'énergie au métal.

L'utilisation de brûleurs et d'injecteurs constitués de lances à oxygène injecté à vitesse supersonique est bien connue. Dans la technologie de fabrication de l'acier au four à arc électrique, on réalise la fusion de ferrailles par établissement notamment d'un arc électrique entre les électrodes du four et le métal, de manière à apporter de l'énergie, fondre le métal et le maintenir en fusion. En utilisant des brûleurs et en ajoutant de l'oxygène et du carbone, on fournit au métal l'énergie supplémentaire permettant d'accélérer le processus de fusion du métal.

L'implantation d'injecteurs d'oxygène, de carbone et de brûleurs en paroi du four ne peut se faire sans prendre en compte un certain nombre de paramètres : positionnement de l'injecteur ou du brûleur sur le panneau, place disponible à l'extérieur du four au niveau de l'implantation choisie etc. Chaque injecteur en paroi ou chaque brûleur est protégé par une enceinte de refroidissement constituée d'une bouillotte habituellement en cuivre, refroidie à l'eau, qui s'insère dans le panneau.

Un brûleur permet de fondre plus rapidement la ferraille et d'éliminer les zones froides du four, alors qu'une lance à oxygène permet d'injecter de l'oxygène dans le laitier pour obtenir un laitier moussant, et d'injecter de l'oxygène dans le bain pour réaliser la décarburation. L'angle de propagation de la flamme du brûleur dans le plan vertical par rapport au plan horizontal doit se situer dans une fourchette angulaire déterminée, la flamme ne pouvant être orientée de façon radiale dans le four. De son côté, l'angle d'injection de l'oxygène par rapport à la surface du bain doit être relativement important, afin que l'oxygène puisse pénétrer dans le bain ou le laitier et ne rebondisse pas sur la surface de l'un des deux. En pratique, les angles d'injection de l'oxygène dans le plan vertical doivent être supérieurs à 40 degrés par rapport au plan horizontal.

Afin de réduire l'encombrement et les problèmes posés par la multiplication des trous dans les panneaux du four, des dispositifs ont été créés pour pouvoir remplir plusieurs fonctions avec les mêmes orifices de sortie de gaz. On connaît ainsi des brûleurs qui peuvent passer en mode " lance à oxygène " ou des lances à oxygène qui peuvent fonctionner en mode " brûleur " en utilisant les mêmes orifices de gaz.

Ces dispositifs propagent donc leur flamme et injectent leur oxygène dans la même direction. Ils ne permettent pas de modifier l'angle d'injection de l'oxygène et celui de la propagation de la flamme, et de ce fait ne peuvent fonctionner avec la même efficacité que deux dispositifs séparés ayant chacun un angle d'injection spécifique.

La présente invention a pour but de proposer une solution permettant d'éliminer cet inconvénient, en réduisant l'encombrement des injecteurs de gaz autour d'un four tout en conservant leur spécificité et en simplifiant les alimentations en fluide autour du four.

Le four à arc électrique pour la production d'acier visé par l'invention est du type comprenant des injecteurs de gaz équipés d'enceintes respectives de refroidissement disposés dans une paroi du four.

Conformément à l'invention, au moins une enceinte unique est associée à au moins deux injecteurs pour assurer leur refroidissement.

Suivant un mode de réalisation de l'invention, au moins l'un des injecteurs est un injecteur de gaz supersonique telle qu'une lance à oxygène, et au moins un autre injecteur est un brûleur pouvant utiliser au moins un gaz oxygéné et un combustible.

L'enceinte de refroidissement est par exemple une bouillotte utilisant l'eau comme fluide de refroidissement. L'invention permet donc de disposer dans une même bouillotte (généralement en cuivre) un brûleur et une lance à oxygène supersonique orientés tous les deux dans les plans vertical et horizontal suivant des angles propres à leurs fonctions respectives.

En principe cette disposition ne nécessite pas d'accroissement des dimensions de la bouillotte par rapport à une bouillotte associée à un brûleur ou à un injecteur à oxygène selon l'art antérieur.

Suivant une autre caractéristique de l'invention :
- Dans le plan vertical l'axe longitudinal du brûleur, qui correspond à l'angle de propagation de sa flamme, délimite avec un plan horizontal un angle compris entre 20 et 30 degrés environ ; dans le plan horizontal l'angle entre l'axe longitudinal du brûleur et un plan vertical perpendiculaire à la paroi de l'enceinte de refroidissement, est compris entre zéro degré et 30 degrés environ.

D'autres particularités et avantages de l'invention apparaîtront au cours de la description qui va suivre, faite en référence aux dessins annexés qui en illustrent plusieurs formes de réalisation à titre d'exemples non limitatifs.

La figure 1 est une vue en élévation latérale simplifiée d'un four à arc électrique pour la production d'acier équipé d'injecteurs disposés conformément à l'invention suivant un premier mode de réalisation possible.

La figure 2 est une vue de dessus schématique du four de la figure 1 équipé d'une paire d'injecteurs.

La figure 3 est une vue en élévation partielle des orifices d'injection des injecteurs à travers l'enceinte de refroidissement disposée dans la paroi du four suivant un second mode de réalisation.

La figure 4 est une vue en coupe partielle suivant 4/4 de la figure 3 montrant l'orientation des deux orifices d'injection des injecteurs dans un plan horizontal à travers l'enceinte de refroidissement.

La figure 5 est une vue en coupe suivant 5/5 de la figure 4 dans un plan vertical.

La figure 6 est une vue en coupe suivant 6/6 de la figure 4 dans un plan vertical.

La figure 7 est une vue en perspective d'un troisième mode de réalisation de la paire d'injecteurs de gaz des figures 1 et 2 ainsi que de leur enceinte de refroidissement.

La figure 8 est un diagramme illustrant un exemple non limitatif des débits de différents gaz dans une paire d'injecteurs disposés à travers la paroi d'un four électrique conformément à l'invention, pendant les phases successives de fusion et d'affinage du bain d'acier.

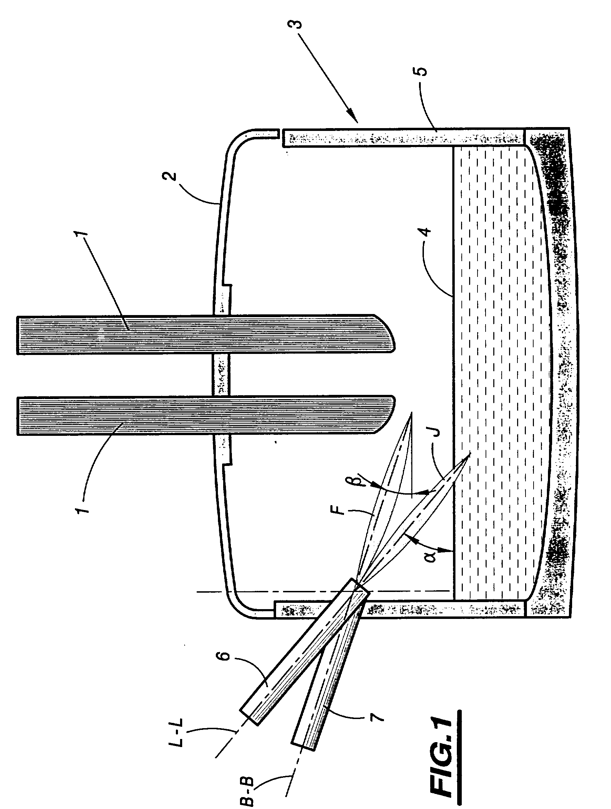

Le four à arc électrique représenté aux figures 1 à 7 est destiné à la production d'acier par fusion de ferrailles entre des électrodes 1 disposées verticalement à travers le couvercle 2 d'un four 3 contenant un bain de métal liquide 4.

Le four 3 comporte une paroi verticale 5 traversée par une série d'injecteurs de gaz dont seulement deux 6, 7 sont représentés. L'injecteur 6 est par exemple une lance à oxygène injecté à vitesse supersonique, et l'injecteur 7 est un brûleur utilisant au moins un gaz oxygéné et un combustible tel que du gaz naturel.

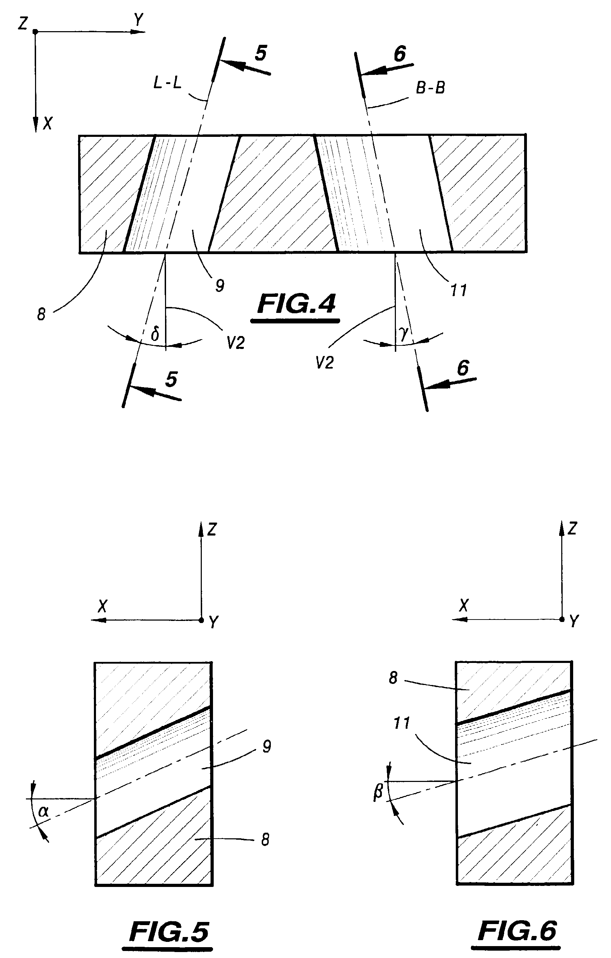

Ces deux injecteurs 6, 7 traversent une enceinte unique 8 de refroidissement disposée dans la paroi 5 du four 3. Chaque injecteur 6, 7 est orienté angulairement à travers cette enceinte unique 8 de refroidissement de manière appropriée au gaz et à la fonction correspondants. Les axes L-L et B-B sont également les axes longitudinaux des orifices respectifs 9, 11 d'injection d'oxygène et de point de départ de la flamme du brûleur 6, ménagés dans l'enceinte de refroidissement 8 (figures 4 à 6).

Chaque injecteur 6, 7 présente un axe longitudinal respectif L-L et B-B et est disposé avec une inclinaison déterminée de son axe longitudinal dans un plan horizontal et dans un plan vertical. Le jet d'oxygène J est orienté suivant l'axe longitudinal L-L et la flamme F du brûleur 7 s'étend suivant son axe B-B.

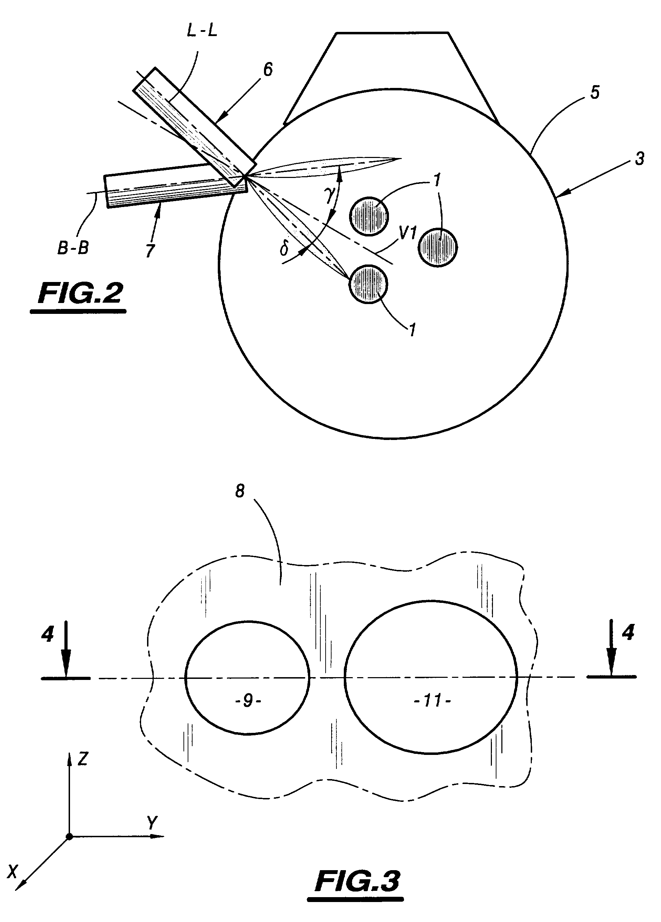

Dans le plan vertical l'axe longitudinal B-B du brûleur 7, auquel correspond l'axe de la flamme F, délimite avec un plan horizontal un angle β compris entre 20 et 30 degrés environ. Dans le plan horizontal l'axe B-B délimite avec un plan vertical radial V1 (Fig.2) du four 3, passant sensiblement par un point central d'un arc joignant les centres des deux injecteurs 6, 7, un angle γ compris entre zéro degré et 30 degrés environ. A la figure 2 l'angle γ est d'environ 30 degrés, tandis que dans l'exemple de la figure 4, cet angle γ n'est que de 15 degrés environ (angle entre un plan radial vertical V2 et l'axe BB du brûleur 6).

Dans le plan vertical l'angle α entre l'axe longitudinal L-L de l'injecteur de gaz supersonique 6 et un plan horizontal est compris (figure 5) entre 35 et 60 degrés environ ; dans le plan horizontal, l'angle δ entre ledit axe longitudinal L-L et un plan vertical radial V2 intersectant l'axe LL, est compris entre zéro degré et 30 degrés environ. Dans l'exemple de la figure 4 l'angle δ est ainsi de 15 degrés environ.

Aux figures 3, 4, 5 et 6 on a représenté les axes des trois dimensions : X pour l'horizontale, Y pour la transversale horizontale, Z pour la verticale.

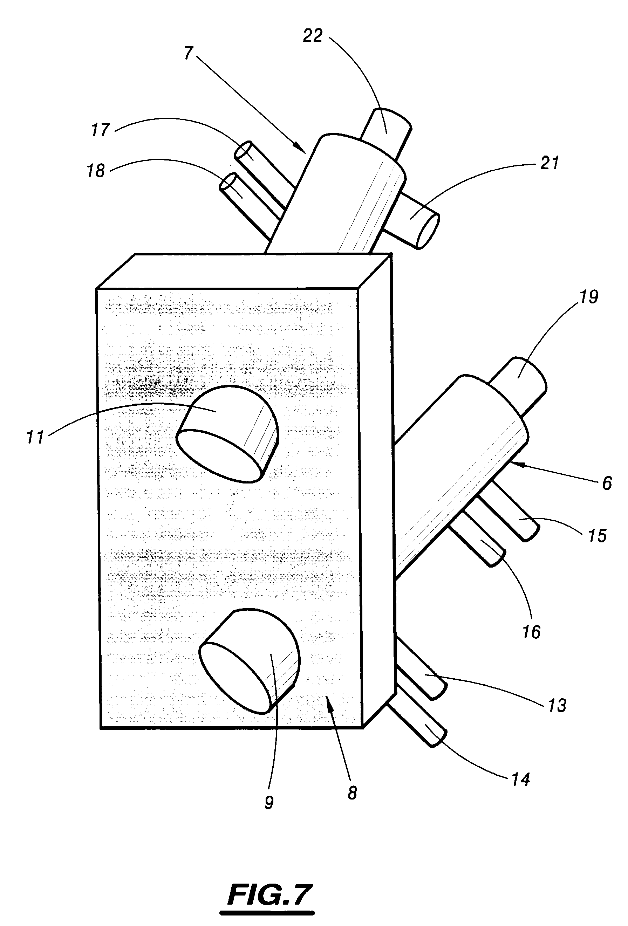

Par ailleurs sur la figure 7 qui montre un troisième mode de réalisation de l'invention, la bouillotte 8 est munie de manière connue d'une entrée 13 et d'une sortie 14 de l'eau du circuit de refroidissement ; de même les injecteurs 6 et 7 sont munis respectivement d'une entrée 15 et d'une sortie 16, ainsi que d'une entrée 17 et d'une sortie 18 de l'eau de leur circuit de refroidissement propre. L'oxygène est introduit par un embout 19 dans l'injecteur 6, et dans le brûleur 7 par un embout 21 ; le gaz naturel y est injecté par une entrée 22.

Les injecteurs 6, 7 sont ici pratiquement superposés dans un plan vertical, alors que dans les réalisations précédentes ils sont décalés dans un plan horizontal.

Conformément au procédé de mise en oeuvre du four selon l'invention, le jet de gaz supersonique de la lance à oxygène 6 a un débit avantageusement compris entre 50 et 2500 Nm³/h, et sa vitesse d'injection est comprise entre 10 et 1000m/s environ. De son côté le brûleur 7 fonctionne avec au moins un gaz oxygéné à 25% d'oxygène au minimum, et un gaz combustible, et délivre une puissance maximale comprise entre 0,5 et 5MW.

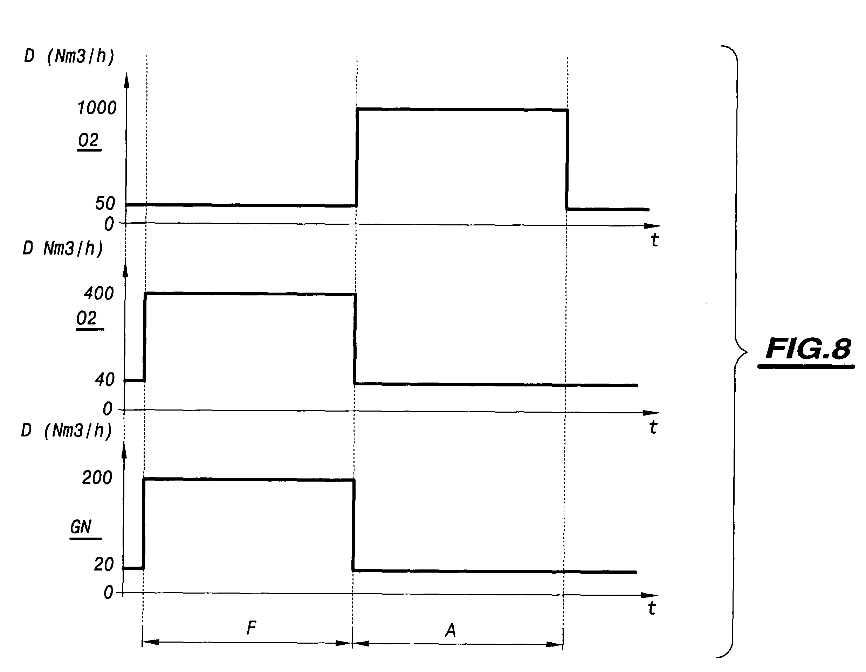

Le diagramme de la figure 8 illustre un exemple indicatif des valeurs des débits D en Nm³/h, en fonction du temps durant un cycle de fabrication d'acier dans le four 3 (fusion F, puis affinage A) de l'oxygène O₂ de la lance 6, de l'oxygène O₂ du brûleur B, et du gaz naturel GN du brûleur 7.

Le four électrique 3 peut être équipé de plusieurs enceintes 8 de refroidissement, par exemple des bouillottes en cuivre à refroidissement par eau, au moins l'une de ces bouillottes étant munie d'au moins deux injecteurs de gaz tels que 6 et 7.

L'invention permet donc de réunir dans la même bouillotte de refroidissement 8, sans accroître en principe ses dimensions, au moins deux injecteurs, ce qui représente une diminution notable de l'encombrement par rapport aux agencements des fours antérieurs. La flamme F et le jet d'oxygène J ne sont pas injectés de manière nécessairement radiale mais légèrement tangentielle, les deux angles δ et γ dans le plan horizontal n'étant pas nécessairement égaux.

A titre d'exemple non limitatif, les angles précités peuvent avoir les valeurs suivantes : α = 45 degrés, β = 20 degrés, δ = 0 et γ = 0.

En dehors des périodes de fusion F et d'affinage A, le brûleur 7 et l'injecteur 6 ont des débits gazeux correspondant aux débits de veille. Une fois la ferraille chargée, le brûleur 7 fonctionne à plein régime, dégageant les ferrailles chargées dans le four 3 aux alentours immédiats du brûleur. La lance 6 est en débit de veille. Dès que ces alentours ont été dégagés, la lance à oxygène 6 peut être utilisée en mode supersonique, le brûleur 7 restant en fonctionnement jusqu'à la fin de la fusion. Pendant la période d'affinage A, seule la lance 6 fonctionne en régime normal, le brûleur 7 restant en débit de veille. Une fois la coulée terminée, l'injecteur 6 et le brûleur 7 se retrouvent en débit de veille.

## Revendications

1. Four à arc électrique (3) pour la production d'acier par fusion de ferrailles entre des électrodes (1), comprenant des injecteurs (6, 7) de gaz équipés d'enceintes respectives (8) de refroidissement, disposées dans une paroi (5) du four, caractérisé en ce qu'au moins une enceinte unique (8) est associée à au moins deux injecteurs (6, 7) pour assurer leur refroidissement, et en ce que chaque injecteur (6, 7) est orienté angulairement de manière appropriée au gaz et à la fonction correspondants.

2. Four selon la revendication 1, caractérisé en ce qu'au moins l'un des injecteurs est un injecteur de gaz supersonique (6) tel qu'une lance à oxygène, et au moins un autre injecteur est un brûleur (7) pouvant utiliser au moins un gaz oxygéné et un combustible.

3. Four selon l'une des revendications 1 et 2, dans lequel chaque injecteur (6, 7) présente un axe longitudinal (L-L, B-B), caractérisé en ce que chaque injecteur est disposé avec une inclinaison déterminée de son axe longitudinal dans un plan horizontal et dans un plan vertical.

4. Four selon les revendications 2 et 3, caractérisé en ce que dans le plan vertical l'axe longitudinal (BB) du brûleur (7), qui correspond à l'angle de propagation de sa flamme (F), délimite avec un plan horizontal un angle (β) compris entre 20 et 30 degrés environ, et dans le plan horizontal l'angle (γ) entre l'axe longitudinal (BB) du brûleur et un plan radial vertical (V2 ou V1), est compris entre zéro degré et 30 degrés environ.

5. Four selon les revendications 2, 3 et 4, caractérisé en ce que dans le plan vertical l'angle (α) entre l'axe longitudinal (LL) de l'injecteur de gaz supersonique (6) et un plan horizontal est compris entre 35 et 60 degrés environ, et dans le plan horizontal l'angle (δ) entre ledit axe longitudinal (LL) et un plan radial vertical (V2 ou V1) est compris entre zéro degré et 30 degrés environ.

6. Procédé pour la mise en oeuvre du four à arc électrique (3) selon l'une quelconque des revendications 2 à 5, caractérisé en ce que le jet (J) de gaz supersonique a un débit compris entre 50 et 2500 Nm³/h et sa vitesse d'injection est comprise entre 10 et 1000 m/s.

7. Procédé selon la revendication 6, caractérisé en ce que le brûleur (7) fonctionne avec au moins un gaz oxygéné à 25% d'oxygène au minimum, et un gaz combustible, et en ce qu'il délivre une puissance maximale comprise entre 0,5 et 5 MW.
